# EUROPEAN PATENT APPLICATION

(11) **EP 2 320 201 A1**
(43) Date of publication of application: **11.05.2011**
(21) Application number: 09809650.6
(22) Date of filing: 13.05.2009
(51) Int. Cl.: G01F 3/10

(54) **AXIAL FLOW POSITIVE DISPLACEMENT FLOWMETER**

(30) Priority: 25.08.2008 JP 2008214872
(71) Applicant: Oval Corporation, Tokyo 161-8508 (JP)
(72) Inventor: UCHIDA, Katsuichi, Tokyo 161-8508 (JP)
(74) Representative: Grünecker, Kinkeldey, Stockmair & Schwanhäusser Anwaltssozietät
(86) International application number: PCT/JP2009/058901
(87) International publication number: WO 2010/023995

(57) **Abstract**

An axial flow positive displacement flowmeter capable of reducing pressure loss, manufacturable at low cost, and having high accuracy. The axial flow positive displacement flowmeter (1) comprises a pair of rotors (10) of a same shape and a same size with different torsional directions, a casing (4) in which the rotors (10) are housed, an inflow side lid (2) for sealing the inflow side end of the casing (4), an inflow port (21) formed in the flange (22) of an inflow side lid (2), an outflow side lid (3) for sealing the outflow side end of the casing (4), and an outflow port (31) formed in the flange (32) of the outflow side lid (3). The inflow port (21) and the outflow port (31) are arranged in alignment with each other along the flowing direction of a fluid to be metered.

## Description

### TECHNICAL FIELD

The present invention relates to an axial flow positive displacement flowmeter and more particularly to an axial flow positive displacement flowmeter equipped with a pair of spiral gears having different torsional directions in a casing.

### BACKGROUND ART

Conventionally, axial flow positive displacement flowmeters are classified into two types depending on the presence of a pilot gear and, if a pilot gear is included, it is not necessary to give consideration to friction resistance of a tooth surface while cost of manufacturing is increased in terms of the number of parts and the difficulty of assembling work. Therefore, preferably, a pilot gear is not added to construct an inexpensive flowmeter. However, if no pilot gear is included, it is difficult to inexpensively construct an accurate flowmeter with a conventional technology since friction resistance of a rotor tooth surface has a considerable effect on accuracy.

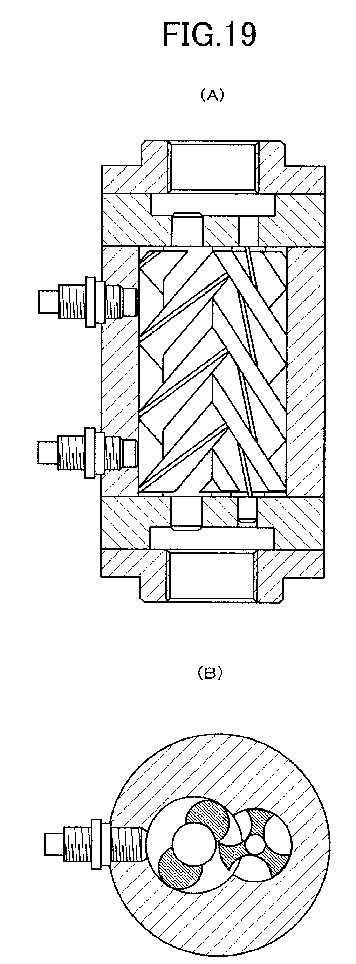

For example, Patent Document 1 describes a typical existing axial flow positive displacement flowmeters. Although a pair of rotors having different tooth profiles is used as depicted in Figs. 19(A) and 19(B), if rotor tooth profiles are different, it is problematic that a lot of effort is required for the manufacturing such as fabricating tools corresponding to their respective tooth profiles and it is difficult to keep balance, resulting in a disadvantage, i.e., unsuitability for usage at high speed. An instrumental error characteristically moves to the negative direction in an instrumental error curve as a flow rate increases.

Therefore, it is important to suppress leakage of measured liquid from a constant volume portion formed between a rotor and a casing or between both rotors to realize highly accurate measurement. Since this leakage depends on a size and width of a gap between a rotor and a casing and a differential pressure between before and after measurement (pressure drop of a flowmeter), a method for realizing higher accuracy is conceivable such as reducing a gap between a rotor and a casing or a gap between rotors and reducing the pressure drop, but the reduction of the former gap is limited because the parts mutually move, and it is believed that the practical limit level has already been reached.

### PRIOR ART DOCUMENT

### PATENT DOCUMENT

Patent Document 1: German Patent Application Laid-Open Publication No. DE19513781A1

### DISCLOSURE OF THE INVENTION

### PROBLEMS TO BE SOLVED BY THE INVENTION

Although various structures are under study such as eliminating the presence of a curved portion to reduce the pressure drop in a conventional axial flow positive displacement flowmeter, in the case of the conventional axial flow positive displacement flowmeter described in Patent Document 1, since a pair of rotors is configured as two-blade and three-blade rotors and have different sizes, the rotors are difficult to be balanced with each other and used at high speed and it is problematic that a lot of efforts are required for the manufacturing.

The present invention was conceived in view of the situations and it is therefore the object of the present invention to provide an inexpensive highly-accurate axial flow positive displacement flowmeter capable of reducing a pressure drop.

### MEANS FOR SOLVING THE PROBLEM

To solve the problem, a first technical means comprises a pair of spiral gears of the same shape having different torsional directions; a casing that houses the pair of the spiral gears; an inflow side lid that seals an inflow end of the casing; an inflow port formed in a pipe connecting portion of the inflow side lid; an outflow side lid that seals an outflow end of the casing; and an outflow port formed in a pipe connecting portion of the outflow side lid, and the inflow port and the outflow port are arranged on a straight line along a flow direction of measured fluid.

A second technical means is the first technical means comprising bearing portions that rotatably support the spiral gears in the casing, wherein the bearing portions are radial boll bearings on the inflow side and the outflow side.

A third technical means is the second technical means, wherein the bearing portions on the outflow side are angular ball bearings.

A fourth technical means is any one of the first to third technical means, wherein the casing has partially opening lid portions on the inflow end and the outflow end, and the lid portion has an opening area equal to or greater than an inflow area of a measuring chamber formed by the spiral gears and the casing.

A fifth technical means is the fourth technical means, wherein the casing is provided with a space between at least one axial end of the spiral gear and the lid portion.

A sixth technical means is any one of the first to fifth technical means comprising a magnet disk attached to the back end of any one of the pair of the spiral gears and a detecting portion that detects rotation of the magnet disk.

A seventh technical means is the sixth technical means, wherein the detecting portion is made up of an amorphous sensor and is provided near an outflow side surface of the lid portion formed at the outflow end of the casing.

An eighth technical means is the sixth technical means, wherein the magnet disk has a plurality of air vent holes formed in a disk around an attachment portion.

A ninth technical means is the sixth technical means, wherein a counter weight having the same inertia moment as that of the magnet disk is attached to the back end of the other spiral gear without the magnetic disk attached.

A tenth technical means is any one of the first to ninth technical means, wherein the pair of the spiral gears has a first tooth surface formed by a trochoid tooth profile from one point on a root circle to a tooth tip point near an addendum circle in a perpendicular cross-section of each spiral gear and a second tooth surface that has at least a portion of a tooth tip portion connected to the tooth tip point formed as a trochoid-forming curve and has a single-point continuous contact tooth profile connected to a tooth profile consisting of the trochoid-forming curve, and wherein the tooth tip portion of the second tooth surface included in one of the gears is configured to engage with the trochoid tooth profile of the first tooth surface included in the other gear.

### EFFECTS OF THE INVENTION

According to the present invention, since a pair of spiral gears of the same shape having different torsional directions is equipped in a casing and an inflow port and an outflow port are arranged on a straight line in the same direction as a flow direction of measured fluid to eliminate the presence of a curved portion, it is possible to realize higher accuracy inexpensively and reduce a pressure drop at the same time.

### BRIEF DESCRIPTION OF DRAWINGS

[Fig. 1] Fig. 1 is a diagram of an exemplary configuration of an axial flow positive displacement flowmeter according to a first embodiment of the present invention.
[Fig. 2] Fig. 2 shows cross-sectional views taken along lines X-X and Y-Y of the axial flow positive displacement flowmeter depicted in Fig. 1.
[Fig. 3] Fig. 3 is a diagram of a side view of the axial flow positive displacement flowmeter depicted in Fig. 1 when it is turned by 90 degrees.
[Fig. 4] Fig. 4 shows the axial flow positive displacement flowmeter depicted in Fig. 3 when it is viewed from the inflow side lid and from the outflow side lid.
[Fig. 5] Fig. 5 is a diagram of an exemplary configuration of a rotor equipped in the axial flow positive displacement flowmeter depicted in Fig. 1.
[Fig. 6] Fig. 6 is a diagram of a side view of the rotor depicted in Fig. 5.
[Fig. 7] Fig. 7 is a diagram of an exemplary configuration of a bearing portion equipped in the axial flow positive displacement flowmeter of the present invention.
[Fig. 8] Fig. 8 is a diagram of an exemplary configuration of an axial flow positive displacement flowmeter according to a second embodiment of the present invention.
[Fig. 9] Fig. 9 shows cross-sectional views taken along lines X-X and Y-Y of the axial flow positive displacement flowmeter depicted in Fig. 8.
[Fig. 10] Fig. 10 is a diagram of a side view of the axial flow positive displacement flowmeter depicted in Fig. 8 when it is turned by 90 degrees.
[Fig. 11] Fig. 11 shows the axial flow positive displacement flowmeter depicted in Fig. 10 when it is viewed from the inflow side lid and from the outflow side lid.
[Fig. 12] Fig. 12 is a diagram of an exemplary configuration of a pickup disk.
[Fig. 13] Fig. 13 is a diagram of an exemplary configuration of a rotor equipped in the axial flow positive displacement flowmeter depicted in Fig. 8.
[Fig. 14] Fig. 14 is a diagram of another exemplary configuration of a rotor equipped in the axial flow positive displacement flowmeter of the present invention.
[Fig. 15] Fig. 15 shows diagrams for comparing and explaining axial cross-sections of the rotors of the embodiments of the present invention.
[Fig. 16] Fig. 16 shows an example of specifications of the rotors depicted in Fig. 15.
[Fig. 17] Fig. 17 shows an example of a graph for comparing pressure drop of the flowmeter of the present invention and a conventional flowmeter.
[Fig. 18] Fig. 18 shows an example of a graph for comparing instrumental error test results of the flowmeter of the present invention and a conventional flowmeter.
[Fig. 19] Fig. 19 is a diagram of a configuration of a conventional axial flow positive displacement flowmeter.

### PREFERRED EMBODIMENTS OF THE INVENTION

Preferred embodiments of an axial flow positive displacement flowmeter of the present invention will now be described with reference to the accompanying drawings.

### (First Embodiment)

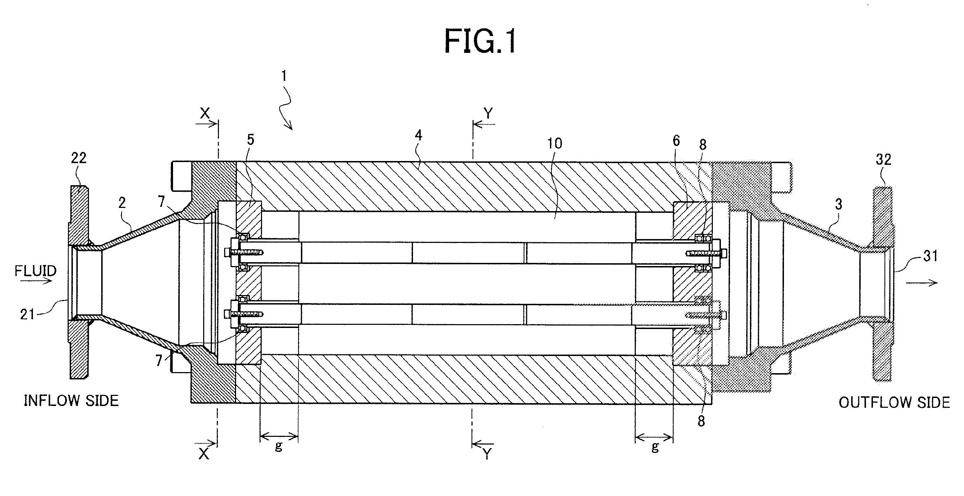

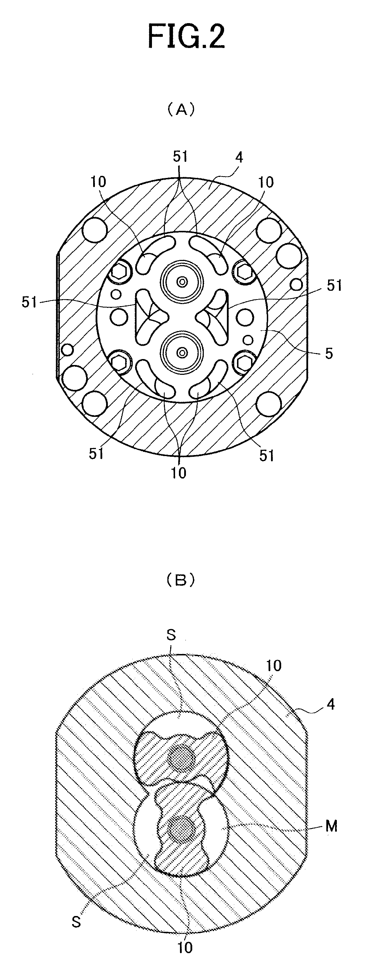

Fig. 1 is a diagram of an exemplary configuration of an axial flow positive displacement flowmeter according to a first embodiment of the present invention. Fig. 2 (A) depicts a cross-sectional view taken along line X-X of the axial flow positive displacement flowmeter and Fig. 2(B) depicts a cross-sectional view taken along line Y-Y of the axial flow positive displacement flowmeter.

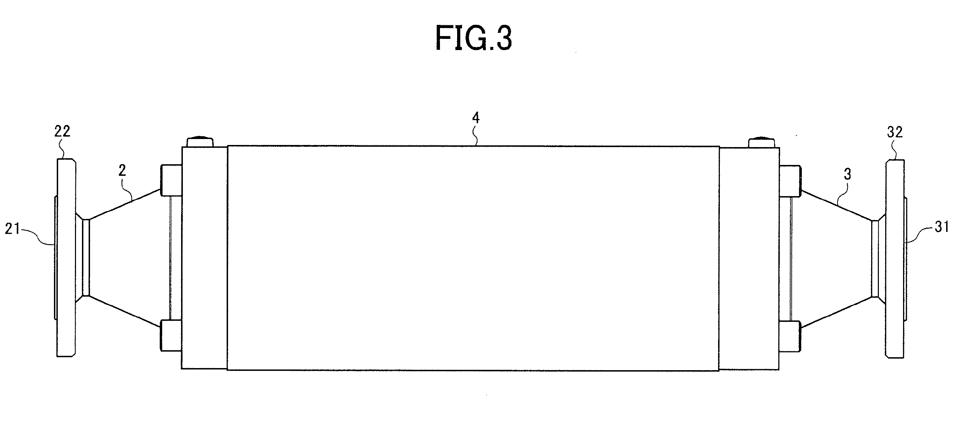

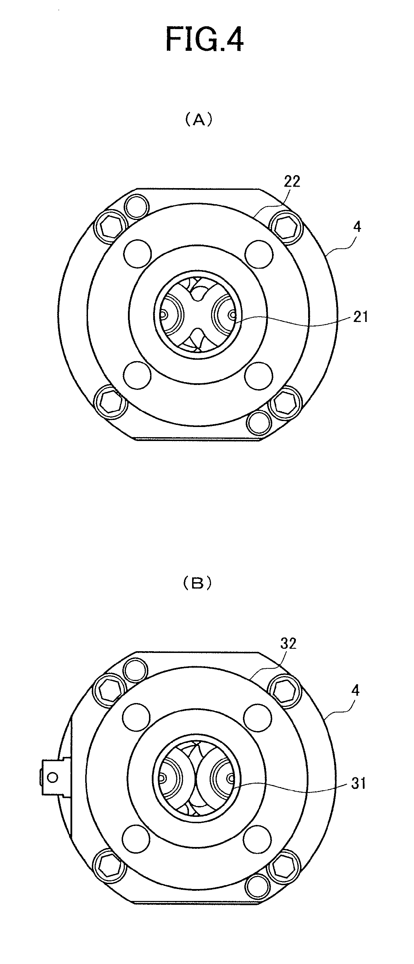

Fig. 3 is a diagram of a side view of the axial flow positive displacement flowmeter depicted in Fig. 1 when it is turned by 90 degrees. Fig. 4 (A) depicts the axial flow positive displacement flowmeter depicted in Fig. 3 when it is viewed from the inflow side lid and Fig. 4 (B) depicts the axial flow positive displacement flowmeter depicted in Fig. 3 when it is viewed from the outflow side lid. In Figs. 1 to 4, 1 denotes an axial flow positive displacement flowmeter and the axial flow positive displacement flowmeter 1 includes an inflow side lid 2, an outflow side lid 3, a casing 4, bearing fixing portions 5, 6, bearing portions 7, 8, and spiral gears (hereinafter, rotors) 10.

In Figs. 1 to 4, the casing 4 houses the rotors 10 and rotatably supports rotor shafts of the rotors 10 with the bearing portions 7, 8 provided on both ends. A pair of the rotors 10 is configured with the same shape and the same size, has different torsional directions, and rotates in a mutually engaging manner. The casing 4 is provided with a measuring chamber M which communicates with an outflow port 31 and an inflow port 21 and the inflow side lid 2 and the outflow side lid 3 are attached to seal the both opening ends of the measuring chamber M. The inflow side lid 2 is provided with the inflow port 21 allowing inflow of measured fluid and a flange 22 for connecting with external pipe arrangement (not shown). The outflow side lid 3 is provided with the outflow port 31 allowing outflow of the measured fluid and a flange 32 for connecting with the external pipe arrangement. The flanges 22, 32 correspond to pipe connecting portions and form the inflow port 21 and the outflow port 31, respectively, and the axial flow positive displacement flowmeter 1 is connected to the external pipe arrangement through the flanges 22, 32. The measured fluid flows in a direction of an arrow of Fig. 1.

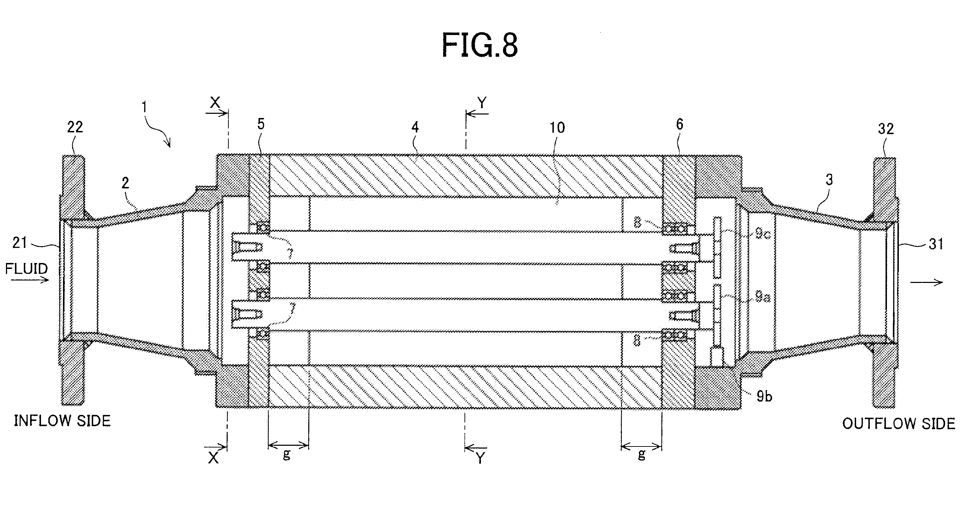

A magnet disk provided with transmitting magnets (not shown) is integrally attached to the rotor shaft of the rotor 10 and this magnet disk rotates in accordance with the rotation of the rotor shaft. A magnet sensor (not shown) is disposed in close vicinity to this magnet disk. The magnet sensors may be, for example, those that utilize Barkhausen jump employing a hall element, a magnetoresistance element, or an amorphous metal fiber. This magnetic sensor detects the rotation of the magnetic disk, i.e., the rotation of the rotor 10, to measure a flow rate of the measured fluid. A configuration of the magnetic disk will be described later in detail with reference to Figs. 8 to 12.

The axial flow positive displacement flowmeter 1 of this embodiment is configured with the inflow port 21 and the outflow port 31 that are arranged on a straight line along the flow direction of the measured fluid to eliminate the presence of a curved portion from the inflow port 21 to the outflow port 31. This reduces the pressure drop due to a curved portion. A pair of the rotors 10 is configured with the same shape and size and therefore inexpensively produced by constraining the cost of manufacturing as compared to rotors having different shapes.

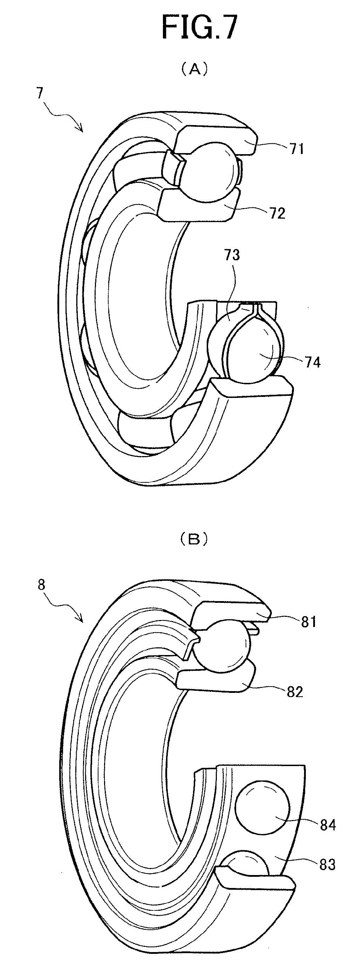

The bearing portions 7, 8 rotatably support the rotor shafts of the rotors 10. The bearing portions 7, 8 are made up of radial ball bearings (described later in Fig. 7), etc., on the inflow side (the bearing portion 7) and the outflow side (the bearing portion 8) and, if a thrust load is heavy, the bearing portion 8 on the outflow side is preferably made up of an angular ball bearing which has excellent load resistance characteristics in radial ball bearings. The bearing portion 7 on the inflow side is generally subjected to a lighter thrust load. This is because when the measured fluid flows in the flowmeter, the rotors 10 are pressed against the outflow side due to a pressure difference and the thrust load is increased on the outflow side and reduced on the inflow side. Therefore, the bearing portion 7 on the inflow side may not necessarily be an angular ball bearing.

Partially opening lid portions are formed at the inflow end and the output end of the casing 4. The lid portions correspond to the bearing fixing portions 5, 6 (hereinafter, often, lid portions 5, 6) and an opening area of the lid portion 5, i.e., an area of through-holes 51 formed in the lid portion 5 depicted in Fig. 2(A), is set equal to or greater than the inflow area of the rotors 10. This inflow area corresponds to an area of white portions S depicted in Fig. 2 (B), i.e., an inflow area of the measuring chamber M formed by the rotors 10 and the casing 4. This makes it possible to eliminate a pressure difference in the measuring chamber M and reduce the pressure drop. Through-holes are assumed to be formed in the lid portion 6 on the outflow side in the same manner as in the lid portion 5.

In Fig. 1, the casing 4 is provided with a space g between the axial inflow end of the rotor 10 and the lid portion 5 and between the axial outflow end of the rotor 10 and the lid portion 6. This makes it possible to further reduce the pressure drop. The lid portions 5, 6 are provided with through-holes to allow passage of the measured fluid. If no space exists between the lid portions 5 and 6 in a flow channel for inflow and outflow between the lid portions 5, 6 and the measuring chamber of the rotors 10, it is thought that the pressure drop increases because the flow channel is narrowed down. Providing the space g as above enables further reduction of the pressure drop. Although the space g is provided at both ends in the direction of axial of the rotor 10 in the example of Fig. 1, the space g may be provided at only one end in the direction of axial of the rotor 10.

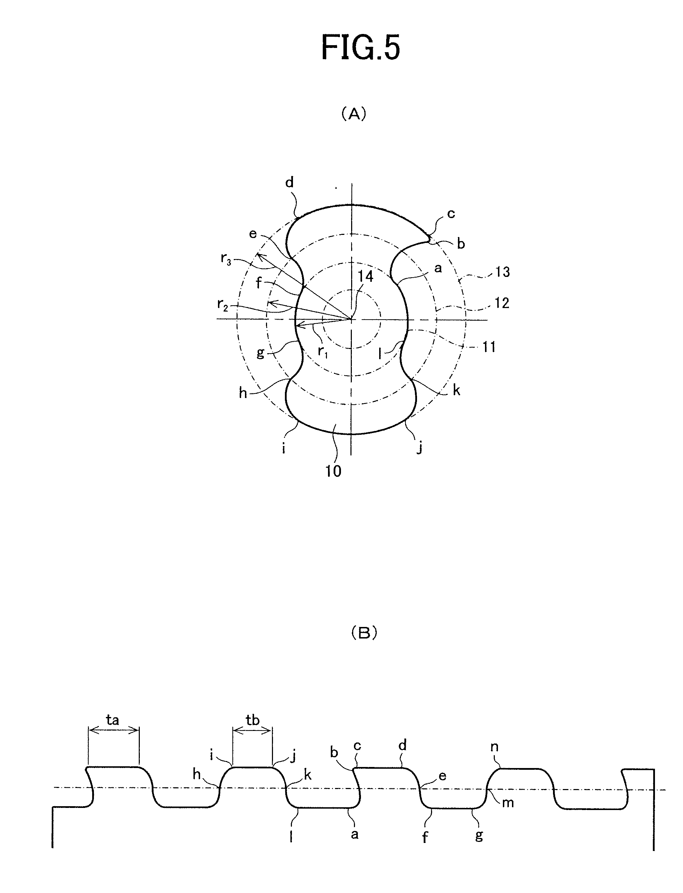

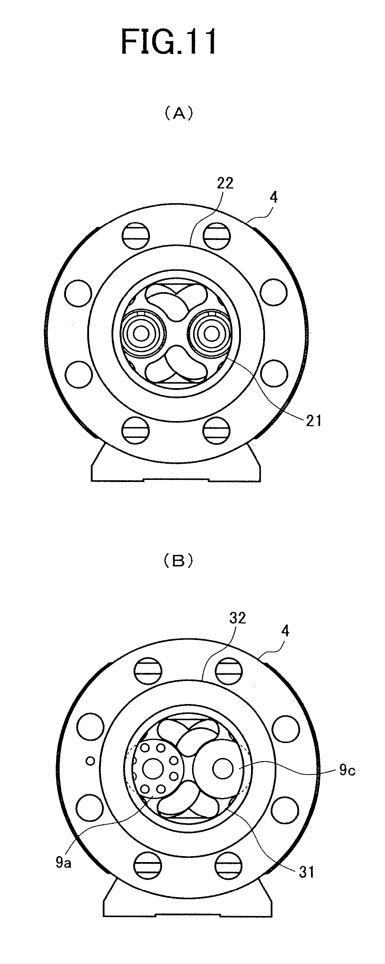

Fig. 5 is a diagram of an exemplary configuration of a rotor equipped in the axial flow positive displacement flowmeter depicted in Fig. 1. Fig. 5(A) depicts a perpendicular cross-section of the rotor and Fig. 5(B) depicts a portion of an axial cross section of the rotor. In Fig. 5(A), 11 denotes a root circle of radius r₁; 12 denotes a pitch circle of radius r₂; 13 denotes an addendum circle of radius r₃; and 14 denotes the rotation center.

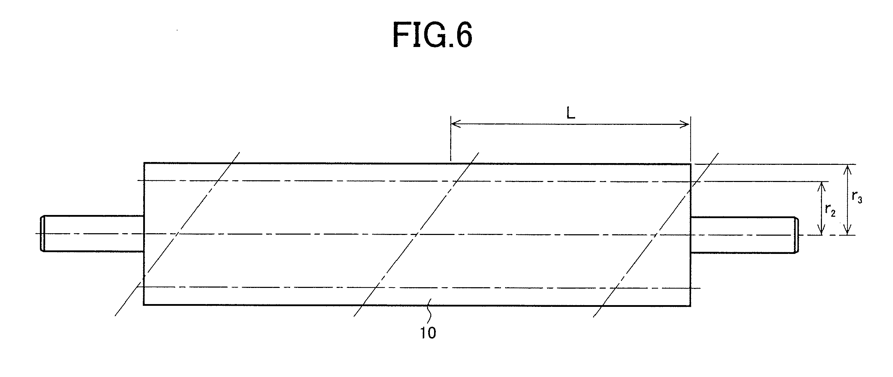

Fig. 6 is a diagram of a side view of the rotor depicted in Fig. 5 and L denotes a pitch length in Fig. 5.

A pair of the rotors 10 has a first tooth surface forming a trochoid tooth profile from one point on the root circle 11 to a tooth tip point near the addendum circle 13 in the perpendicular cross-section of each rotor and a second tooth surface that has at least a portion of a tooth tip portion connected to the tooth tip point formed as a trochoid-forming curve and has a single-point continuous contact tooth profile connected to a tooth profile consisting of the trochoid-forming curve, and the tooth tip portion of the second tooth surface included in one of the rotors is configured to engage with the trochoid tooth profile of the first tooth surface included in the other rotor. The length of the trochoid tooth profile in the first tooth surface is determined depending on the length of the tooth profile consisting of the trochoid-forming curve in the second tooth surface.

In Figs. 5 (A) and 5(B), a curve ab is a trochoid curve; a curve be is a circular arc curve; a curve cd is a circular arc curve of radius r₃ inscribed in the addendum circle 13; a curve def is a composite curve combining a circular arc and cycloid; a curve fg is a circular arc curve of radius r₁ circumscribed on the root circle 11; a curve ghi is a composite curve combining a circular arc and cycloid; a curve ij is a circular arc curve of radius r₃ inscribed in the addendum circle 13; a curve jkl is a composite curve combining a circular arc and cycloid; and a curve la is a circular arc curve of radius r₁ circumscribed on the root circle 11. The trochoid-forming curve may be, for example, a circular arc, an elliptic arc, a spiral, a sine curve, a hyperbolic curve, an involute curve, and a composite curve thereof. The configurations of these curves are the same on the other rotor of the pair.

In this example, the configuration of the rotor has advantages that the rotors are usable at high speed because of the excellent balance and that specialized tools necessary at the time of processing are more easily fabricated.

In the case of this example, the single-point continuous contact tooth profile employs a tooth profile made up of a cycloidal curve instead of a logix tooth profile described later. Although the friction of the tooth surface increases when the cycloidal curve is used, this is acceptable for practical use since a pilot function is included in the same way as in the involute. The single-point continuous contact tooth profile portion may be a logix, cycloidal, or circular arc tooth profile described above, i.e., a Wildhaver-Novikov type tooth profile.

Fig. 7 is a diagram of an exemplary configuration of a bearing portion equipped in the axial flow positive displacement flowmeter of the present invention. Fig. 7(A) depicts a configuration of the bearing portion 7 on the inflow side; in Fig. 7, 71 denotes an outer ring; 72 denotes an inner ring; 73 denotes a cage; and 74 denotes a ball. Fig. 7(B) depicts a configuration of the bearing portion 8 on the outflow side; 81 denotes an outer ring; 82 denotes an inner ring; 83 denotes a cage; and 84 denotes a ball.

In the case of this example, the bearing portion 7 depicted in Fig. 7 (A) is made up of a deep groove ball bearing and the bearing portion 8 depicted in Fig. 7(B) is made up of an angular ball bearing. The former deep groove ball bearing is a most typical rolling bearing and has a wide range of application and a groove of a raceway track provided on the inner ring 72/the outer ring 71 are able to be subjected to the radial load of a cross-section of a circular arc of a radius slightly greater than the radius of the rolling boll 74, and in addition the thrust load (also called axial load) is applicable in both directions. This bearing has low friction torque and is suitable for portions rotating at high speed or applications requiring low noise and low vibration.
On the other hand, the latter angular ball bearing is able to be subjected to the radial load and the thrust load in one direction. For example, the ball 84 and the inner ring 82/the outer ring 81 have a contact angle of 15, 25, 30, or 40 degrees and the larger contact angle is, the bigger load resistance to the thrust load becomes and the smaller contact angle is, the more advantageous to high-speed rotation becomes. Two bearings are normally faced to each other and used by adjusting an internal gap.

### (Second Embodiment)

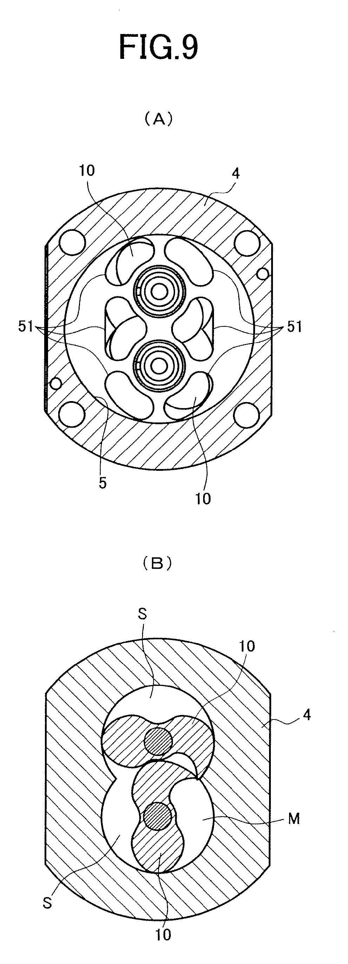

Fig. 8 is a diagram of an exemplary configuration of an axial flow positive displacement flowmeter according to a second embodiment of the present invention. Fig. 9 (A) depicts a cross-section taken along line X-X of the axial flow positive displacement flowmeter and Fig. 9(B) depicts a cross-section taken along line Y-Y of the axial flow positive displacement flowmeter.

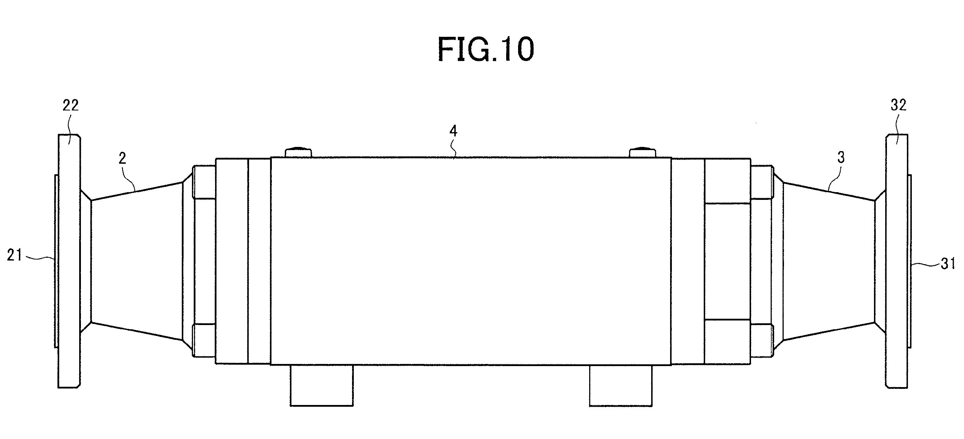

Fig. 10 is a diagram of a side view of the axial flow positive displacement flowmeter depicted in Fig. 8 when it is turned by 90 degrees. Fig. 11(A) depicts the axial flow positive displacement flowmeter depicted in Fig. 10 when it is viewed from the inflow side lid and Fig. 11 (B) depicts the axial flow positive displacement flowmeter depicted in Fig. 10 when it is viewed from the outflow side lid. The axial flow positive displacement flowmeter 1 includes the inflow side lid 2, the outflow side lid 3, the casing 4, the bearing fixing portions 5, 6, the bearing portions 7, 8, and the rotors 10 as is the case with the first embodiment. The flowmeter of this embodiment has the same constituent elements as those of the flowmeter of the first embodiment except the different shape of the rotors 10.

In Figs. 8 to 11, the casing 4 houses the rotors 10 and rotatably supports the rotor shafts of the rotors 10 with the bearing portions 7, 8 provided on both ends. A pair of the rotors 10 is configured with the same shape and the same size, has different torsional directions, and rotates in a mutually engaging manner. The casing 4 is provided with the measuring chamber M which communicates with the outflow port 31 and the inflow port 21 and the inflow side lid 2 and the outflow side lid 3 are attached to seal the both opening ends of the measuring chamber M. The inflow side lid 2 is provided with the inflow port 21 allowing inflow of measured fluid and the flange 22 for connecting with the external pipe arrangement. The outflow side lid 3 is provided with the outflow port 31 allowing outflow of the measured fluid and the flange 32 for connection with the external pipe arrangement.

In Fig. 8, the flowmeter is equipped with a magnet disk (hereinafter, a pickup disk) 9a attached to the back end of one of a pair of the rotors 10 and an amorphous sensor 9b corresponding to a detecting portion that detects the rotation of the pickup disk 9a. The amorphous sensor 9b is provided in the vicinity of the outflow side surface of the lid portion 6 formed at the outflow end of the casing 4. The pickup disk 9a is sized such that the flow of the measured fluid flowing out from the lid portion 6 is not prevented and is desirably made of a lightweight material so as not to add a rotational load to the rotor 10. The amorphous sensor 9b is provided on the back side of a rib of the lid portion 6 so as not to prevent the flow of the measured fluid flowing out from the lid portion 6.

A counter weight 9c having the same inertia moment as that of the pickup disk 9a is attached to the back end of the other rotor 10 to which the pickup disk 9a is not attached. This keeps the rotational balance of the rotors 10 well.

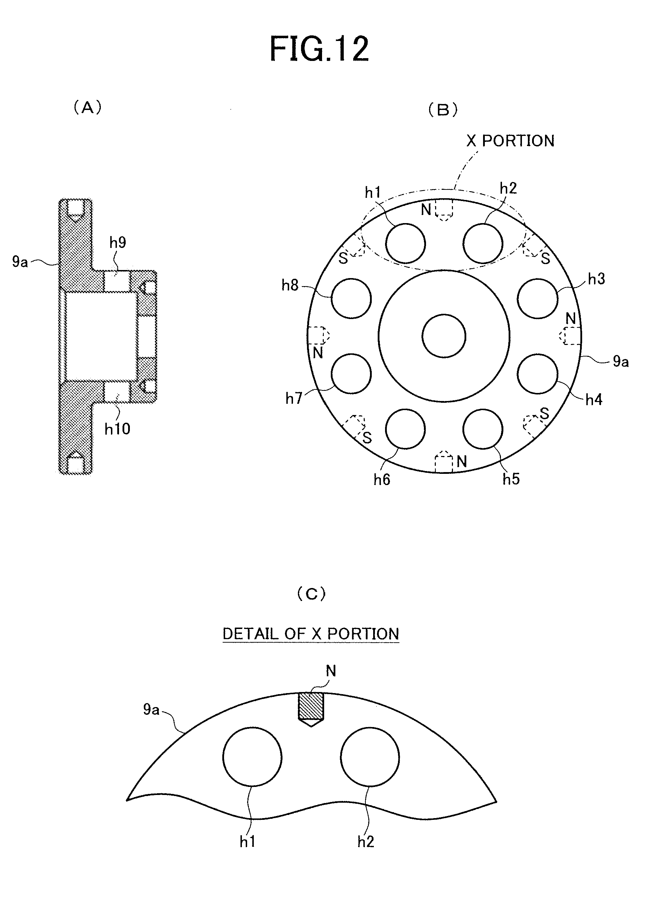

Fig. 12 is a diagram of an exemplary configuration of the pickup disk 9a. Fig. 12(A) is a side view of the pickup disk 9a; Fig. 12(B) is a front view of the pickup disk 9a; and Fig. 12(C) is an enlarged view of an X portion of the pickup disk 9a. Transmitting magnets are arranged along an outer circumference portion of the pickup disk 9a. The letter, N, denotes a north pole of the transmitting magnets and S denotes a south pole of the transmitting magnets. A plurality of air vent holes h1 to h10 are formed in the pickup disk 9a and around an attachment portion thereof (i.e., around a portion projecting to the right in Fig. 12(A)). When the attachment portion of the pickup disk 9a is attached to the back end of the rotor 10, the vent holes h1 to h10 facilitate ventilation.

The pickup disk 9a, the amorphous sensor 9b, and the counter weight 9c are assumed to be arranged in the axial flow positive displacement flowmeter depicted in Fig. 1 in the same way as described above.

According to this embodiment, as described in the first embodiment, since a pair of spiral gears of the same shape having different torsional directions is equipped in a casing and an inflow port and an outflow port are arranged on a straight line in the same direction as a flow direction of measured fluid and no curved portion exists, it is possible to realize the higher accuracy inexpensively and reduce the pressure drop at the same time.

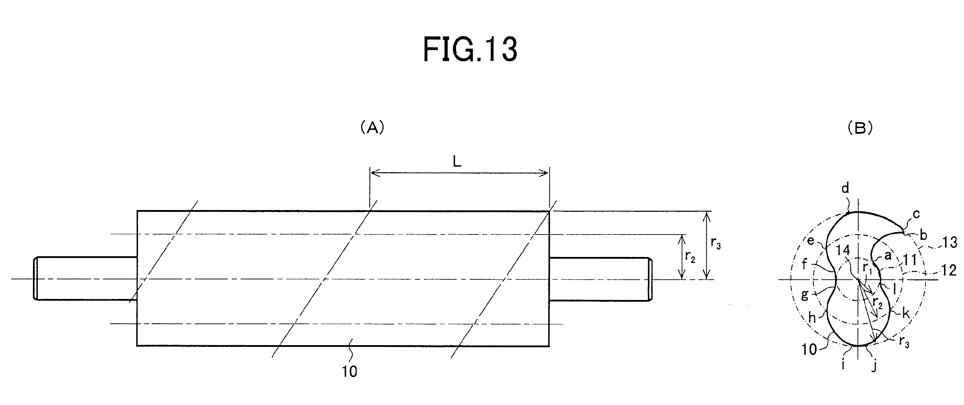

Fig. 13 is a diagram of an exemplary configuration of a rotor equipped in the axial flow positive displacement flowmeter depicted in Fig. 8. Fig. 13(A) depicts a side view of the rotor and Fig. 13(B) depicts a perpendicular cross-section of rotation of the rotor. In Fig. 13(B), 10 denotes a rotor; 11 denotes a root circle of radius r₁; 12 denotes a pitch circle of radius r₂; 13 denotes an addendum circle of radius r₃; and 14 denotes the rotation center.

In the rotor 10 of Fig. 13, a curve ab is a trochoid curve; a curve be corresponding to the tooth tip portion is an involute curve; a curve cd is a circular arc curve of radius r₃ inscribed in the addendum circle 13; a curve def is a composite curve combining a circular arc and a curvature wavy fluctuating curve; a curve fg is a circular arc curve of radius r₁ circumscribed on the root circle 11; a curve ghi is a composite curve combining a circular arc and a curvature wavy fluctuating curve; a curve ij is a circular arc curve of radius r₃ inscribed in the addendum circle 13; a curve jkl is a composite curve combining a circular arc and a curvature wavy fluctuating curve; and a curve la is a circular arc curve of radius r₁ circumscribed on the root circle 11. The configurations of these curves are the same on the other rotor of the pair.

In this embodiment, a curve leading to a termination point (point c) of the involute curve of the curve be forms a single-point continuous contact tooth profile such as a circular arc curve or a curvature wavy fluctuating curve. The curvature wavy fluctuating curve is called a logix gear (see, e.g., Japanese Examined Patent Publication No. 2-15743), is a continuous and differentiable function in which a curvature of a tooth profile curve periodically increases and decreases in the tooth height direction, and is configured so that a relative curvature at the contact point may be substantially zero and a slip ratio may also be zero.

More specifically, the tooth profile curve of this gear in the portion contacting with the counterpart gear is configured such that the curvature thereof periodically changes while repeatedly increasing and decreasing. At the point of the minimum curvature, the centers of both curvatures of the logix gear and the counterpart gear are on the same point on the pitch line.

Although it is not necessary to give much consideration to the rotor friction in the case of a pump since rotors are directly rotated, it is important in the case of a flowmeter to reduce the pressure drop and improve the accuracy. Therefore, the single-point continuous contact tooth profile is used for the engagement between the rotors to reduce the rotor friction and to diminish the pressure drop. Since the reduction of the rotor friction enables to reduce the amount of abrasion of the rotors, it is possible to improve the durability of the rotors.

Although the logix tooth profile is exemplarily illustrated as the single-point continuous contact tooth profile in this embodiment, an involute curve may be used. When an involute curve is used, it is advantageous that the processing is easier than the logix tooth profile.

It is possible to reduce a relative curvature and suppress leakage from a gap or blowhole between the tooth surfaces by using an involute curve for the tooth tip portion and employing trochoid drawn by the involute curve.

In Fig. 13, the rotor 10 is configured to have a rotor length with two pitches or more and to diminish the pressure drop by making the tooth tip area corresponding to the curve cd and the curve ij smaller and reducing the friction between the rotor 10 and the casing 4. For example, it is configured so that a length of the tooth profile portion that continues from the tooth tip portion and contacts with the casing 4 (the curves cd and ij) is ranging from 0.001 times (including) to under 0.170 times as long as one pitch length of the rotor 10. As a specific example, when the pitch length of the rotor 10 is 100 mm, the length of the curve cd is 12.5 mm (0.125 times as long as one pitch length of the rotor 10). The length of the curve ij is 1.3 mm (0.013 times as long as one pitch length of the rotor 10). The pitch length corresponds to a length L depicted in Fig. 12(A).

Although an example of the rotor 10 with two blades is described in this embodiment, two blades make it possible to prevent the rotor 10 from occurrence of vibration at high rotation speed, and thereby it is possible to expand a measurement flow rate range.

Although a circular arc curve is used for the rotor 10, a pilot gear is not necessary since a portion made up of the circular arc curve is used as a pilot portion. Consequently, it is possible to reduce costs due to assembly and adjustment of a pilot gear and reduction of the number of parts.

By increasing a ratio of the root (short diameter) to the tip (long diameter) with respect to the rotor shape, the torque given by fluid increases, and thereby, it is possible to improve the measurement sensitivity when flow rate is small. For example, the length of the long diameter of the rotor 10 is set 2.5 times or more longer than the length of the short diameter. Although this is infeasible in the case of a pump which requires strength, it is possible to increase the ratio of long to short diameter in the case of a flowmeter since strength is not required as compared to a pump.

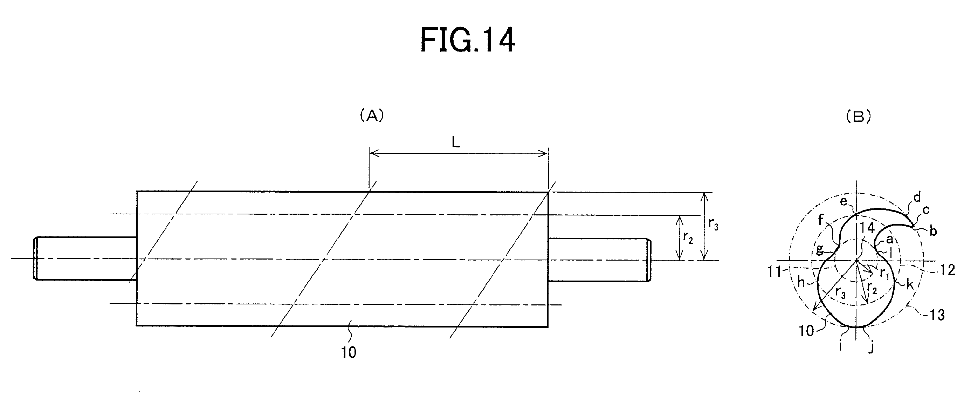

Fig. 14 is a diagram of another exemplary configuration of a rotor equipped in the axial flow positive displacement flowmeter of the present invention. Fig. 14 (A) depicts a side view of the rotor and Fig. 14 (B) depicts a perpendicular cross-section of the rotor. In the rotor 10 depicted in Fig. 14 (B), a curve ab is a trochoid curve; a curve be corresponding to the tooth tip portion is an involute curve; a curve cd is a circular arc curve of radius r₃ inscribed in the addendum circle 13; a curve def is a composite curve combining a circular arc and an involute curve; a curve fg is a circular arc curve of radius r₁ circumscribed on the root circle 11; a curve ghi is a composite curve combining a circular arc and an involute curve; a curve ij is a circular arc curve of radius r₃ inscribed in the addendum circle 13; a curve jkl is a composite curve combining a circular arc and an involute curve; and a curve la is a circular arc curve of radius r₁ circumscribed on the root circle 11.

In the case of this example, an involute curve is used for as the single-point continuous contact tooth profile instead of the logix tooth profile. When an involute curve is used, it is advantageous that the processing is easier than the logix tooth profile.

In the case of the rotor exemplarily illustrated in Fig. 14, the tooth tip area corresponding to the curve cd and the curve ij is further made smaller than that of the rotor exemplarily illustrated in Figs. 6 and 13 and the friction between the rotor 10 and the casing 4 is reduced to diminish the pressure drop. A length of the tooth profile portion that continues from the tooth tip portion and contacts with the casing 4 (the curves cd and ij) is also configured to be ranging from 0.001 times (including) to under 0.170 times as long as one pitch length of the rotor 10. As a specific example, when the pitch length of the rotor 10 is 100 mm, the length of the curve cd is 0.5 mm (0.005 times as long as one pitch length of the rotor 10). The length of the curve ij is 0.5 mm (0.005 times as long as one pitch length of the rotor 10). The pitch length corresponds to a length L depicted in Fig. 14(A).

Although not depicted, the axial flow positive displacement flowmeter of the present invention is applicable to a rotor with one blade (configured with one or more pitches) as well as to a rotor with two blades in the same way, however it becomes possible to prevent the rotor from occurrence of vibration at high rotation speed of the rotor employing two blades, and thereby, it is possible to expand a measurement flow rate range.

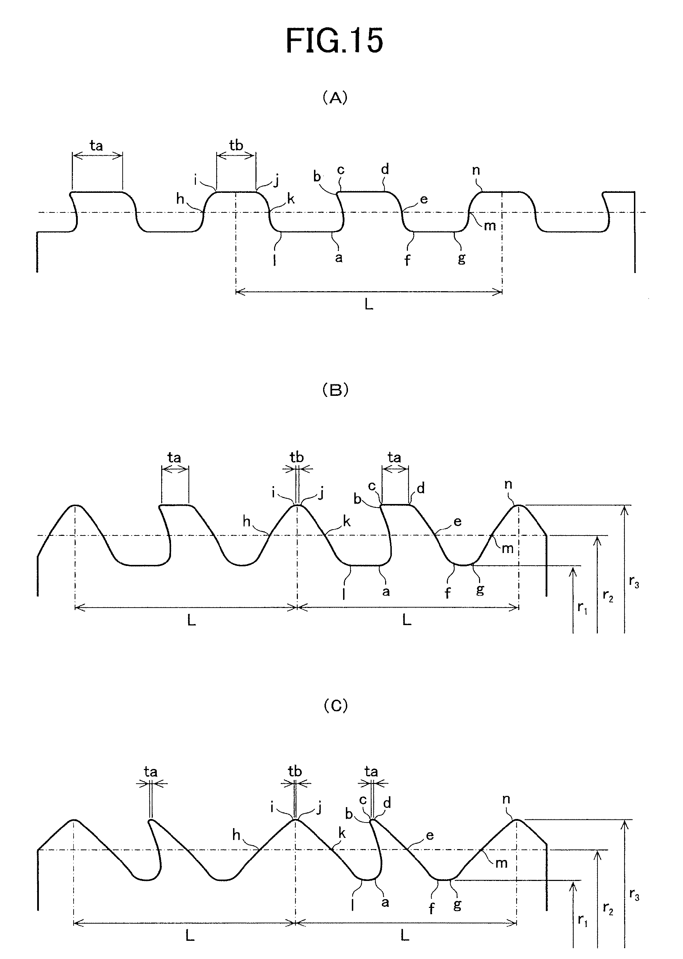

Fig. 15 is a diagram for comparing and explaining axial cross-sections of the rotors of the embodiments of the present invention. Fig. 15(A) depicts a portion of the axial cross-section of the rotor of the present invention depicted in Fig. 6; Fig. 15(B) depicts a portion of the axial cross-section of the rotor of the present invention depicted in Fig. 13; and Fig. 15 (C) depicts a portion of the axial cross-section of the rotor of the present invention depicted in Fig. 14. In Fig. 15, L denotes a pitch length; ta and tb depict seal lengths; r₁ denotes a radius of a root circle (short diameter); r₂ denotes a radius of a pitch circle; and r₃ denotes a radius of an addendum circle (long diameter).

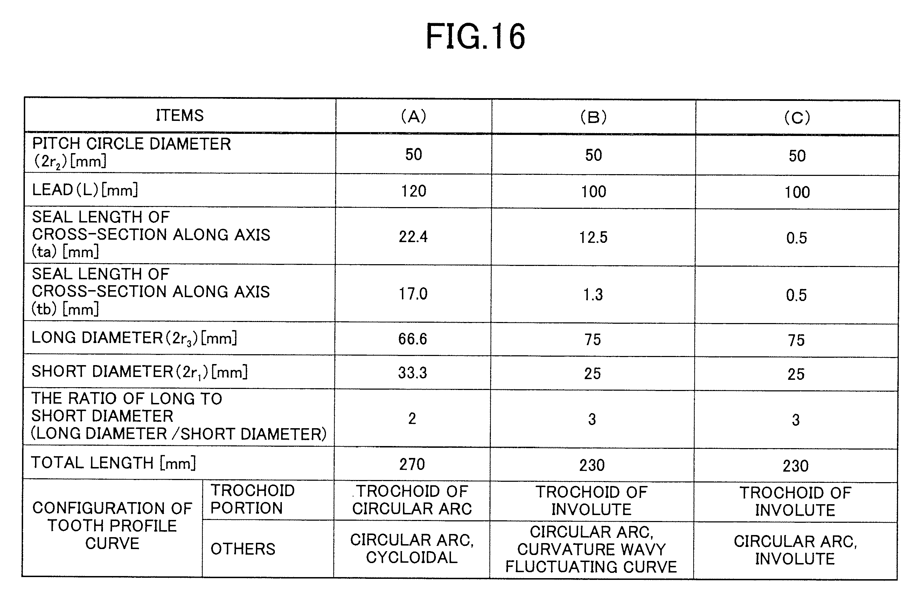

Fig. 16 is a diagram of an example of specifications of the rotors depicted in Fig. 15. The specifications include a pitch circle diameter (2r₂), a lead (pitch) length (L), an axial cross-section seal length (ta), an axial cross-section seal length (tb), a long diameter (2r₃), a short diameter (2r₁), a long/short diameter ratio, an entire length, and a tooth profile curve configuration. (A), (B), and (C) correspond to the rotor of the present invention depicted in Fig. 15 (A), the rotor of the present invention depicted in Fig. 15 (B), and the rotor of the present invention depicted in Fig. 15(C), respectively.

In the case of the rotors exemplarily illustrated in Figs. 15 (B) and 15 (C), as described above, a length of the tooth profile portion that continues from the tooth tip portion and contacts with the casing (the seal length ta of the curve cd and the seal length tb of the curve ij) is configured to be ranging from 0.001 times (including) to under 0.170 times as long as one pitch length of the rotors.

In the case above, when the pitch length of the rotor is 100 mm, the seal has various lengths is ranging from 0.1 mm (including) to 17.0 mm (excluding). In the example of Fig. 15 (B), when the pitch length of the rotor is 100 mm, the seal length ta of the curve cd is 12.5 mm (0.125 times as long as one pitch length of the rotor). The seal length tb of the curve ij is 1.3 mm (0.013 times as long as one pitch length of the rotor).
In the example of Fig. 15(C), when the pitch length of the rotor is 100 mm, the seal length ta of the curve cd is 0.5 mm (0.005 times as long as one pitch length of the rotor). The seal length tb of the curve ij is 0.5 mm (0.005 times of one pitch length of the rotor).

By configuring the rotor length of the rotor with a length equal to or greater than two pitches as above and making the tooth tip area corresponding to the curve cd and the curve ij smaller, i.e., making the seal length ta of the curve cd and the seal length tb of the curve ij smaller as above, the friction between the rotor and the casing is reduced to diminish the pressure drop.

As depicted in Fig. 16, in the case of the rotors of (B) and (C), the ratio of the long to the short diameter is set to 3:1, which is greater than the ratio of the long to the short diameter, 2:1, of the rotor of (A). By increasing the ratio of the root (short diameter) to the tip (long diameter) (the ratio of the long to the short diameter) to equal to or greater than (2.5:1), preferably ranging from (2.5:1) to (4:1), the torque given from fluid increases, and thereby it is possible to improve the measurement sensitivity at smaller flow rate. Although this is infeasible in the case of a pump, which requires strength, the long/short diameter ratio can be increased in the case of a flowmeter since strength is not required as compared to a pump.

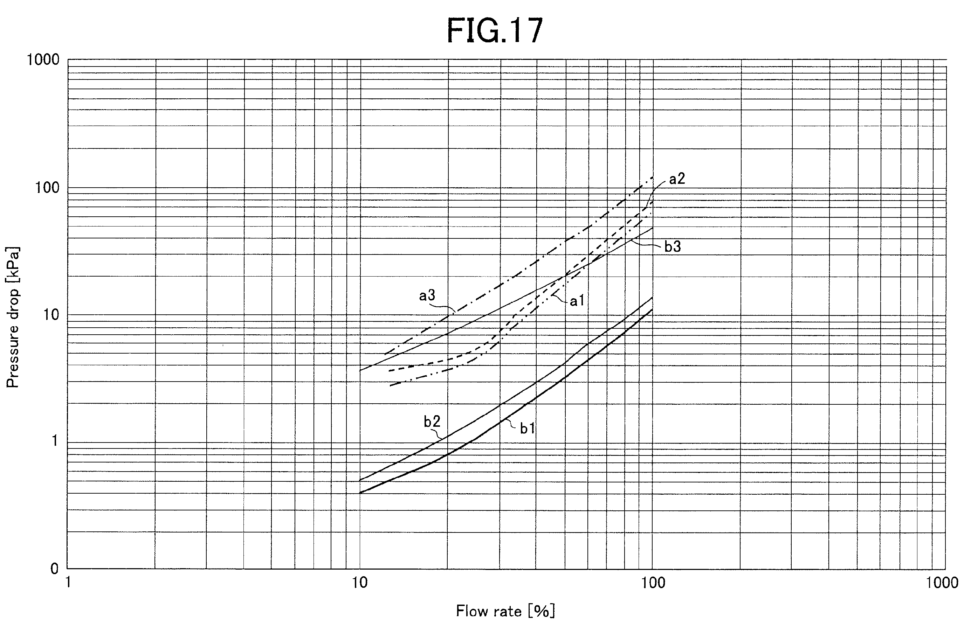

Fig. 17 is a diagram of an example of a graph for comparing pressure drop of the flowmeter of the present invention to that of a conventional flowmeter. In Fig. 17, a1 to a3 denote pressure drop curves in the case of a conventional flowmeter depicted in Fig. 19 and b1 to b3 denote pressure drop curves in the case of the flowmeter of the present invention depicted in Fig. 15(B). The signs, a1 and b1, represent the case that the fluid to be measured is gasoline; a2 and b2 represent the case that the fluid to be measured is kerosene; and a3 and b3 represent the case that the fluid to be measured is fuel oil. The vertical axis indicates the pressure drop (kPa) and the horizontal axis indicates the flow rate (percentage (%) of the flow rate to the maximum flow rate).

As depicted in Fig. 17, comparing the pressure drop curve a1 of the flowmeter of the present invention with the pressure drop curve b1 of the conventional flowmeter when the fluid to be measured is gasoline, it is seen that the flow meter of the present invention is improved since the pressure drop is smaller than that of the conventional flowmeter. The same applies to the case that the fluid to be measured is kerosene or fuel oil, and the flow meter of the present invention is improved since the pressure drop is smaller than that of the conventional flowmeter in the same manner as the gasoline.

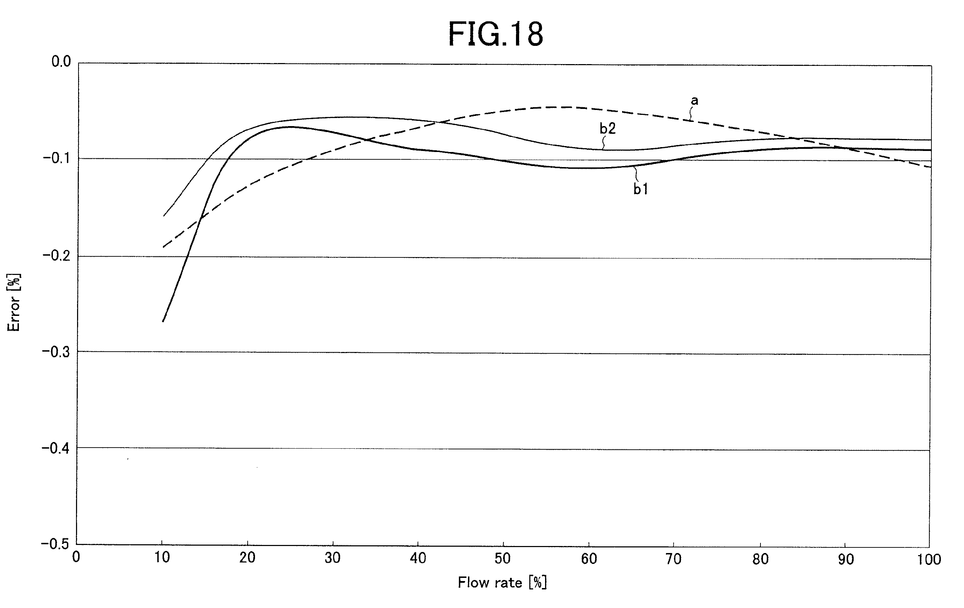

Fig. 18 is a diagram of an example of a graph for comparing instrumental error test results of the flowmeter of the present invention to that of the conventional flowmeter. In Fig. 18, a denotes an instrumental error curve of the conventional flowmeter depicted in Fig. 19. The signs, a1 to b2, denote instrumental error curves of the rotor of the present invention depicted in Fig. 15(B); b1 represents the case that the fluid to be measured is gasoline and b2 represents the case that the fluid to be measured is kerosene. The vertical axis indicates the instrumental error (%) and the horizontal axis indicates the flow rate (percentage (%) of the flow rate to the maximum flow rate). As used herein, an instrumental error is a value obtained by subtracting an actual amount passing through a flowmeter from an indicated amount of the flowmeter or is represented by percentage of the value to the actual amount.

In Fig. 18, comparing characteristics of the instrumental error curve b1 of the rotor of the present invention to that of the instrumental error curve a of the conventional rotor, it is seen that the flowmeter of the present invention is improved such that the instrumental error maintains the linearity without being reduced as a flow rate increases as compared to the conventional flowmeter. The similar tendency is seen in the case that the fluid to be measured is kerosene. Therefore, the flowmeter of the present invention is improved such that the instrumental error maintains the linearity without being reduced as a flow rate increases and a span of instrumental error can be constrained within 0.05 % in the measurement flow rate range to achieve higher accuracy in a wide range.

### EXPLANATIONS OF REFERENCE NUMERALS

1...axial flow positive displacement flowmeter; 2...inflow side lid; 3...outflow side lid; 4...casing; 5, 6...bearing fixing portion (lid portion); 7, 8...bearing portion; 9a...pickup disk; 9b...amorphous sensor; 9c...counter weight; 10...spiral gear (rotor); 11...root circle; 12...pitch circle; 13...addendum circle; 14...rotation center; 21...inflow port; 22, 23...flange; and 31...outflow port.

## Claims

1. An axial flow positive displacement flowmeter comprising: a pair of spiral gears of the same shape having different torsional directions; a casing that houses the pair of the spiral gears; an inflow side lid that seals an inflow end of the casing; an inflow port formed in a pipe connecting portion of the inflow side lid; an outflow side lid that seals an outflow end of the casing; and an outflow port formed in a pipe connecting portion of the outflow side lid,
the inflow port and the outflow port being arranged on a straight line along a flow direction of measured fluid.

2. The axial flow positive displacement flowmeter of claim 1, comprising bearing portions that rotatably support the spiral gears in the casing, wherein
the bearing portions are radial boll bearings on the inflow side and the outflow side.

3. The axial flow positive displacement flowmeter of claim 2, wherein the bearing portions on the outflow side are angular ball bearings.

4. The axial flow positive displacement flowmeter of any one of claims 1 to 3, wherein
the casing has partially opening lid portions on the inflow end and the outflow end, and
the lid portion has an opening area equal to or greater than an inflow area of a measuring chamber formed by the spiral gears and the casing.

5. The axial flow positive displacement flowmeter of claim 4, wherein the casing is provided with a space between at least one axial end of the spiral gear and the lid portion.

6. The axial flow positive displacement flowmeter of any one of claims 1 to 5, comprising a magnet disk attached to the back end of any one of the pair of the spiral gears and a detecting portion that detects rotation of the magnet disk.

7. The axial flow positive displacement flowmeter of claim 6, wherein the detecting portion is made up of an amorphous sensor and is provided near an outflow side surface of the lid portion formed at the outflow end of the casing.

8. The axial flow positive displacement flowmeter of claim 6, wherein the magnet disk has a plurality of air vent holes formed in a disk around an attachment portion.

9. The axial flow positive displacement flowmeter of claim 6, wherein a counter weight having the same inertia moment as that of the magnet disk is attached to the back end of the other spiral gear without the magnetic disk attached.

10. The axial flow positive displacement flowmeter of any one of claims 1 to 9, wherein the pair of the spiral gears has a first tooth surface formed by a trochoid tooth profile from one point on a root circle to a tooth tip point near an addendum circle in a perpendicular cross-section of each spiral gear and a second tooth surface that has at least a portion of a tooth tip portion connected to the tooth tip point formed as a trochoid-forming curve and has a single-point continuous contact tooth profile connected to a tooth profile consisting of the trochoid-forming curve, and wherein
the tooth tip portion of the second tooth surface included in one of the gears is configured to engage with the trochoid tooth profile of the first tooth surface included in the other gear.
